# EUROPEAN PATENT APPLICATION

(11) **EP 1 857 662 A2**
(43) Date of publication of application: **21.11.2007**
(21) Application number: 07017472.7
(22) Date of filing: 13.09.2005
(51) Int. Cl.: F02D 41/16, F02D 41/02

(54) **Method and device for controlling engine idling speed**

(30) Priority: 16.09.2004 JP 2004269847
(62) Divisional of application: 05019857.1
(71) Applicant: Bosch Corporation, Shibuya-ku Tokyo 150-8360 (JP); Toyota Jidosha Kabushiki Kaisha, Toyota-shi, Aichi-ken (JP)
(72) Inventor: Hatekeyama, Tomohiro, Yokohama, Kanagawa 224-8501 (JP); Yamazaki, Akinori, Yokohama, Kanagawa 224-8501 (JP); Amano, Naoki, Toyota-shi, Aichi-ken, 471-8571 (JP); Otsubo, Masaki, Toyota-shi, Aichi-ken, 471-8571 (JP)
(74) Representative: Gesthuysen, von Rohr & Eggert

(57) **Abstract**

In a vehicle equipped with an automated manual transmission, when creep driving is started in an idling state, an idling speed PID control unit of an engine ECU selectively uses an arithmetic constant for the PID control appropriate for the creep driving, so that the occurrence of a hunting phenomenon of an engine speed is suppressed when a clutch is locked up, particularly owing to a quick decrease of an integral term of the PID control.

## Description

The present invention relates to engine idling speed control in a vehicle, and more particularly to the control, in a vehicle equipped with an automated manual transmission, achieving improvement in comfortability, drivability, and the like of the vehicle in an idling state. In particular, the present invention relates to a method according to the preamble of claim 1 or 4 and to a devise according to the preamble of claim 5 or 8.

Vehicle transmission control has been conventionally roughly classified into manual transmission and automatic transmission, but in recent years, in addition to these, a transmission system called an automated manual transmission has come into practical use in order to realize both low power consumption of the manual transmission and ease of the automatic transmission, The automated manual transmission is essentially the manual transmission, with an automatic clutch system and an automatic transmission function.

A transmission system as described above is disclosed in, for example, *"*Development of Motor-type Automated Manual Transmission", Yoshitaka Soga et. al., Paper in the JSAE 2003 Annual Spring Congress Proceedings, No. 59-03, p. 1-4, published on May 21, 2003 by the Society of Automotive Engineers of Japan.

In particular, a transmission system called a motor-type automated manual transmission (MMT) which uses a motor actuator for the connection of a clutch and the shift and selection of a transmission gear is in general use.

A vehicle equipped with such a MMT is capable of, so-called, creep driving, similarly to an automatic transmission-equipped vehicle.

Incidentally, in a vehicle equipped with such an automated manual transmission, the control of an engine idling speed also basically depends on conventionally proposed idling control of various kinds. As such conventional idling control, generally known is, for example, that disclosed in JP 8-121225 A.

Further, as idling control using PID control for controlling a throttle valve of an internal combustion engine, generally known is that disclosed in, for example, JP 2004-003495 A.

However, a vehicle equipped with the above-described automated manual transmission has a problem that creep driving in the idling state causes the occurrence of a hunting phenomenon of the engine speed, thus giving an uncomfortable feeling to a passenger and deteriorating a running feeling of a vehicle. This problem occurs because of the following reason. Specifically, when the creep driving is started in the idling state, a clutch gradually shifts from a half-engaged state to a fully-engaged state (lock-up state), so that the engine speed changes from the idling speed in a non-creep driving mode to a predetermined target speed for the creep driving. However, even after the engine speed reaches the target speed, an integral term (I-term) in the PID control used for the idling speed control, though it should become zero, gradually decreases with a time constant that is set based on a normal driving mode, and particularly because of the slow change of the I-term, the idling control is performed by a remaining value of the integral term so that the engine speed increases in spite that it has reached the target speed.

There is another problem. That is, when the clutch is disengaged for stopping the vehicle in the creep driving mode, a so-called racing of the engine is caused in the idling state by the value of the integral term remaining even after the clutch is disengaged, because of the aforesaid slowly changing characteristic of the integral term of the PID control (proportional integral differential control) used for the idling speed control, and thus a passenger has an uncomfortable feeling and anxiety.

The present invention was made in view of the above-described circumstances, and its object is to provide a method for controlling an engine idling speed and a device for the same that are capable of preventing the occurrence of a hunting phenomenon of the engine speed in a creep driving mode in a vehicle equipped with an automated manual transmission and/or that eliminate useless racing of the engine at the time a vehicle stops when transmission control is in an automatic mode in a vehicle equipped with an automated manual transmission, thus giving no uncomfortable feeling to a passenger.

The above object is achieved by a method according to claim 1 or 4 or by a device according to claim 5 or 8. Preferred embodiments are subject of the subclaims.

According to a first aspect of this invention, when creep driving of the vehicle is started during the idling state of the engine, an arithmetic constant in the PID control is changed to a value appropriate for the creep driving.

According to a second aspect of this invention, the device for controlling engine idling speed comprises:
a creep discriminating means for generating signals corresponding to start and end of creep driving respectively;
a target speed generating means for calculating and outputing a target speed of the engine in a creep driving mode in the idling state and a target speed of the engine in a non-creep driving mode in the idling state, based on an output of the creep discriminating means; and
a PID control means for generating a control signal for speed control of the engine by a PID operation based on a difference between the output of the target speed generating means and the actual speed of the engine,
wherein the PID control means changes an arithmetic constant in the PID operation when the creep discriminating means outputs the signal corresponding to the start of the creep driving.

### Brief Description of the Drawings

Fig. 1 is a block diagram showing a configuration example of a vehicle electronic control system in which a device for controlling an engine idling speed in an embodiment of the present invention is realized;
Fig. 2 is a block diagram showing a functional configuration example of an idling speed PID control unit that is realized in an engine ECU of the vehicle electronic control system shown in Fig. 1;
Fig. 3 is a sub-routine flowchart showing the processing procedure of idling speed control executed by the engine ECU;

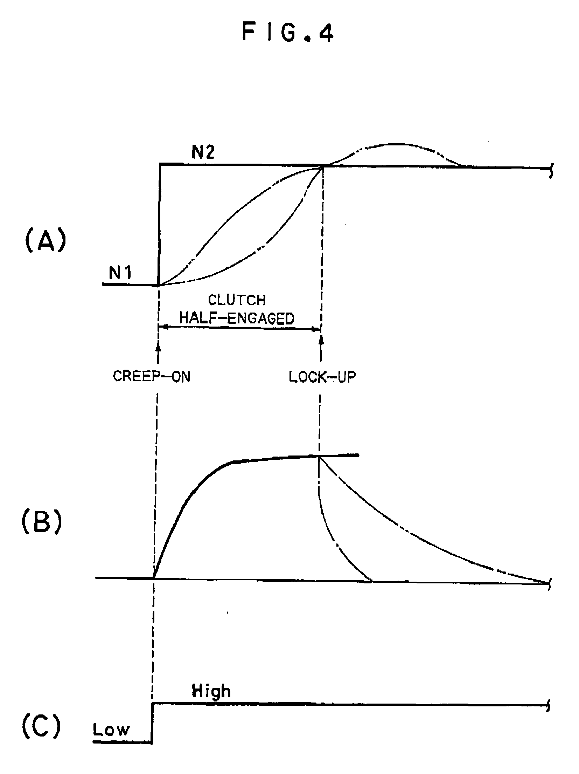

Fig. 4(A), Fig. 4(B), and Fig. 4(C) are explanatory charts to explain the relation between a change of an integral term and an engine speed when arithmetic constants in PID control are changed, Fig. 4(A) being an explanatory chart schematically showing a change of a target engine speed, a change of an actual engine speed, and a change of a vehicle speed when creep driving is started in an idling state; Fig. 4(B) being an explanatory chart schematically showing an average change of a target torque difference I-term DMLLRI up to a lock-up state in an integral term generating unit, a change of the target torque difference I-term DMLLRI after the lock-up in a case where the arithmetic constants are changed, and a change of the target torque difference I-term DMLLRI after the lock-up in a case where the arithmetic constant is set by an integration initial condition setting unit; and Fig. 4(C) being an explanatory chart schematically showing a change of a creep activate flag; and
Fig. 5(A), Fig. 5(B), and Fig. 5(C) are explanatory charts to explain forced reset of the target torque difference 1-term DMLLRI, Fig. 5(A) being an explanatory chart schematically showing a change of the target engine speed and a change of the vehicle speed before and after the forced reset of the target torque difference I-term DMLLRI; Fig, 5(B) being an explanatory chart to schematically explain changes of the target torque difference I-term DMLLRI before and after the forced reset; and Fig. 5(C) being an explanatory chart schematically showing a change of the creep activate flag.

### Description of Specific Embodiment

Hereinafter, details of the present invention will be described with reference to the attached drawings.

It should be noted that members, arrangement, and so on described below are not intended to limit the present invention, and various changes may be made without departing from the spirit of the present invention.

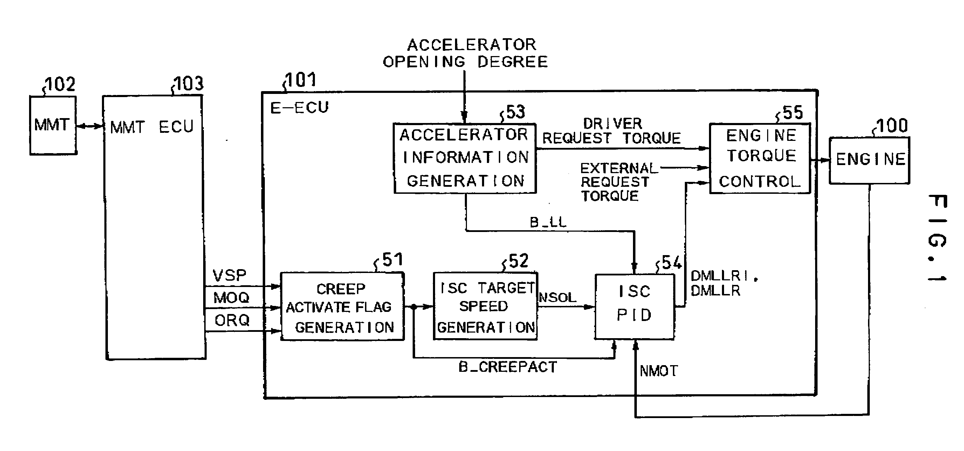

First, a configuration example of a vehicle electronic control system in which a device for controlling an engine idling speed in an embodiment of the present invention is realized will be described with reference to Fig. 1.

The vehicle electronic control system for operation control of a vehicle includes, as its main constituent elements; an engine electronic control unit (represented by 'E-ECU' in Fig. 1) 101 for operation control of an engine 100 as an internal combustion engine; a transmission (represented by 'MMT' in Fig. 1) 102 changing a rotational driving force of the engine 100 to transmit it to wheels (not shown); and a transmission electronic control unit (represented by 'MMT ECU' in Fig, 1) 103 for operation control of the transmission 102.

First, the transmission 102 in the embodiment of the present invention has preferably a generally know configuration called a motor-type automated manual transmission (MMT). Specifically, this motor-type automated manual transmission is essentially a manual transmission, with an automatic clutch system and an automatic transmission function, and realizes a manual transmission operation and a transmission operation in an automatic mode, which corresponds to an automatic transmission operation, according to the selection by a driver. Particularly because of the use of a motor actuator for the connection of a clutch and the shift and selection of a transmission gear in the automatic mode, it is called a motor-type.

The transmission electronic control unit (hereinafter, referred to as 'a transmission ECU') 103 controls the operation of the aforesaid transmission 102 based on information regarding rotation operation or information of the engine 100 that is sent from the engine electronic control unit (hereinafter, referred to as 'an engine ECU') 101, and is mainly constituted of a microcomputer having a generally known configuration, and executes a program necessary for the operation control to realize the operation control of the transmission 102,

While controlling the operation of the transmission 102, the transmission ECU 103 described above outputs to the engine ECU 101, which will be described later, three pieces of information, as necessary information for idling speed control, the three pieces of information being gear position information VSP (represented by 'VSP' in Fig, 1), a control mode request value MRQ (represented by 'MRQ' in Fig. 1), and a creep request flag ORQ (represented by 'ORQ' in Fig. 1).

Here, the gear position information VSP is position information of transmission gears (not shown) of the transmission 102, that is, information indicating which transmission gear (not shown) is selected.

The control mode request value MRQ indicates a state of an operation control request to the engine ECU 101 from the transmission 102 and the transmission ECU 103, and a value preset according to the requested operation state is outputted.

The creep request flag ORQ is outputted when the transmission 102 is in a controlled state for creep driving.

These pieces of information are outputted from the transmission ECU 103 to the engine ECU 101 in predetermined code formats respectively.

The engine ECU 101 is mainly constituted of a microcomputer having a generally known configuration, and in Fig. 1, a configuration example of its portions involved in the idling speed control of the engine 100 are shown as functional blocks.

Specifically, the engine ECU 101 in the embodiment of the present invention includes: a creep activate flag generating unit (represented by 'creep activate flag generation' in Fig. 1) 51; an idling target speed generating unit (represented by 'ISC target speed generation' in Fig. 1) 52; an accelerator information generating unit (represented by 'accelerator information generation' in Fig. 1) 53; an idling speed PID control unit (represented by 'ISC PID' in Fig. 1) 54, and an engine torque control unit (represented by 'engine torque control' in Fig. 1) 55. Concretely, these units 51 to 55 are realized by a microcomputer (not shown) executing programs.

The creep activate flag generating unit 51 generates and outputs a creep activate flag B_CREEPACT (represented by 'B_CREEPACT' in Fig. 1) which is a signal indicating the start and stop of creep driving, based on the three pieces of information, namely, the gear position information VSP, the control mode request value MRQ, and the creep request flag ORQ which are inputted from the transmission ECU 103. Concretely, for example, a logical value of the creep activate flag B_CRBEPACT is set to High at an instant when the creep driving control starts, is kept High until the end of the creep driving control, and is set to Low when the creep driving control is terminated.

The idling target speed generating unit 52 calculates a target idling speed NSOL (represented by 'NSOL' in Fig. 1) of the engine 100 in the idling state based on a predetermined arithmetic expression and outputs it to the idling speed PID control unit 54, which will be described later. In the idling target speed generating unit 52 of the present invention, a value of the target idling speed NSOL of the engine 100 is calculated differently in the following two states. One of the two states is when the aforesaid creep activate flag B _CREEP ACT is OFF, that is, when its logical value is Low, in other words, in a normal idling state other than the creep driving mode, and the other state is when the aforesaid creep activate flag B_CREEPACT is ON, that is, when its logical value is High, in other words, in the creep driving mode. Specifically, when the creep activate flag B_CREEPACT is ON, the creep driving is taken into account in calculating the target idling speed NSOL of the engine 100.

The accelerator information generating unit 53 receives information on an accelerator opening degree from an external part, and it generates and outputs a driver request torque and an idling flag B_LL (represented by 'B_LL' in Fig. 1) based on the information on the accelerator opening degree.

Here, the driver request torque is a rotational torque of the engine 100 which is necessary for an opening degree indicated by the information on the accelerator opening degree, and it is calculated from a predetermined arithmetic expression to be outputted.

Further, the idling flag B_LL is a flag indicating the idling state or not. Concretely, for example, '1' is set when it is judged based on the information on the accelerator opening degree that a not-shown accelerator is not depressed, namely, when it is judged that the current state is the idling state, and in other cases, '0' is set.

The idling speed PID control unit 54 receives the aforesaid creep activate flag B_CREEPACT, target idling speed NSOL, and idling flag B_LL, and an actual engine speed NMOT (represented by 'NMOT' in Fig. 1) which is an actual speed of the engine 100 detected by a not-shown sensor, and performs the PID control for a difference between the target idling speed NSOL and the actual engine speed NMOT. As a result, the idling speed PID control unit 54 outputs a target torque difference I-term DMLLRI (represented by 'DMLLRI' in Fig. 1) for an I-term and a target torque difference PD-term DMLLR (represented by 'DMLLR' in Fig. 1) for a PD-terms.

Then, the two target torque differences DMLLRI, DMLLR are used for controlling the engine speed in the engine torque control unit 55, which will be described next.

The engine torque control unit 55 calculates the speed of the engine 100 based on the aforesaid driver request torque from the accelerator information generating unit 53, an external request torque determined by various external factors, and input data on the target torque difference I-term DMLLRI and the target torque difference PD term DMLLR which are inputted from the idling speed PID control unit 54, and it outputs a necessary control signal so that the speed of the engine 100 becomes the calculated speed.

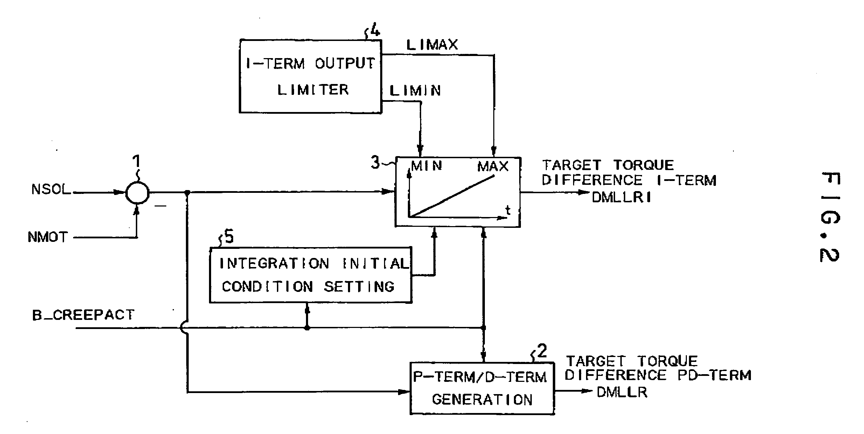

Here, the idling speed PID control unit 54 in the embodiment of the present invention is capable of changing arithmetic constants for the PID control in the creep driving mode in the idling state from arithmetic constants for the PID control in the normal idling state other than the creep driving mode. Fig. 2 shows a more concrete configuration example of the idling speed PID control unit 54 having such a function, which is illustrated as functional blocks. Hereinafter, this configuration example will be described with reference to Fig. 2.

The idling speed PID control unit 54 shown in Fig. 2 includes an addition/subtraction unit 1, a P-term/D-term generating unit (represented by 'P-term/D-term generation' in Fig. 2) 2, an integral term generating unit 3, an I-term output limiter 4, and an integration initial condition setting unit (represented by 'integration initial condition setting' in Fig. 2) 5. These units are functionally realized in actual operation by the execution of programs.

The addition/subtraction unit 1 calculates the aforesaid difference (NSOL - NMOT) between the target idling speed NSOL inputted from the idling target speed generating unit 52 and the actual engine speed NMOT of the engine 100, and the calculated value is inputted to the P-term/D-term generating unit 2 and the integral term generating unit 3.

The P-term/D-term generating unit 2 generates a proportional value (P-term) and a differential value (D-term) for the difference (NSOL - NMOT) obtained by the addition/subtraction unit 1 to output them as the target torque difference PD-term DMLLR.

Especially, the P-term/D-term generating unit 2 of the embodiment of the present invention is capable of changing an arithmetic constant for generating the respective values of the P term and the D term when the creep activate flag B_CREEPACT is ON, from an arithmetic constant when the creep activate flag B_CREEPACT is OFF, so that the appropriate target torque difference PD term DMLLR according to each state can be obtained.

The integral term generating unit 3 generates the integral term (I-term) for the difference (NSOL - NMOT) obtained by the addition/subtraction unit 1 to output it as the target difference 1-term DMLLRI.

In particular, the integral term generating unit 3 in the embodiment of the present invention is capable of changing an arithmetic constant for generating the integral term when the creep activate flag B_CREEPACT is ON from an arithmetic constant when it is OFF, so that the appropriate target torque difference I-term DMLLRI according to each state can be obtained, as will be described next.

Specifically, when the creep activate flag B_CREEPACT is OFF, the integral constant (arithmetic constant) for the state other than the creep driving mode is inputted as an initial condition from the integration initial condition setting unit 5 to the integral term generating unit 3, and based on the inputted integral constant, an integration operation is performed. On the other hand, when the creep activate flag B_CREEPACT is ON, the arithmetic constant pre-stored in the integral term generating unit 3 is used for the integration operation instead of the arithmetic constant supplied from the integration initial condition setting unit 5, in order to obtain the target torque difference I-term DMLLRI. Here, the arithmetic constant that is set when the creep activate flag B_CREEPACT changes to ON is set from the viewpoint such that the integral term decreases at a higher decrease rate than that in the normal state, that is, when the arithmetic constant that is set as the initial condition by the integration initial condition setting unit 5 is used.

Fig. 4(A), Fig, 4(B), and Fig. 4(C) show explanatory charts to explain the relation between a change of the integral term and the engine speed when the arithmetic constants in the PID control are changed. Hereinafter, the aforesaid change of the arithmetic constants will be more concretely described with reference to Figs. 4(A) to 4(C),

First, in Fig. 4(A), the solid line, the chain double-dotted line, and the chain line are characteristic lines schematically showing a change of a target speed of the engine 100, a change of an actual engine speed, and a change of a vehicle speed, respectively, when the creep driving is started in an idling state. Further, in Fig. 4(B), the solid line, the chain line, and the chain double-dotted line are characteristic lines schematically showing an average change of the target torque difference 1-term DMLLRI up to a lock-up state in the integral term generating unit 3, a change of the target torque difference I-term DMLLRI after the lock-up in a case where the arithmetic constants are changed, and a change of the target torque difference I-term DMLLRI after the lock-up in a case where the arithmetic constant is set by the integration initial condition setting unit 5, respectively.

First, conventionally, when the creep activate flag B_CREEPACT becomes ON (see Fig. 4(C)), that is, when the creep driving is started (creep-on), the target speed of the engine 100 in the idling state is changed from N1 to N2 (see Fig. 4(A)), the target torque difference I-term DMLLRI gradually increases by the integration operation by the integral term generating unit 3 until the clutch is locked up from the half-engaged state (see the solid line portion in Fig. 4(B)), and after the clutch is locked up and the actual speed of the engine 100 reaches the target speed, the integration operation is terminated, so that the target torque difference I-term DMLLRI gradually decreases (see the chain two-dotted line portion in Fig. 4(B)). Then, due to the slow decrease of the target torque difference I-term DMLLRI after the speed of the engine 100 reaches the target speed, a remaining value of the target torque difference 1-term DMLLRI causes the hunting of the engine speed (see the chain two-dotted line portion showing the actual engine speed after the lock-up in Fig. 4(A)). This is because the arithmetic constant in the conventional integration operation is set without taking the creep driving into account but is set based on a condition where the engine 100 has no load.

On the other hand, in the embodiment of the invention of the present application, when the creep driving is started in the idling state, the arithmetic constants are changed in the integral term generating unit 3 so that the target torque difference 1-term DMLLRI, which is an integral term in the PID control, decreases quickly after the lock-up as shown by the chain line in Fig. 4(B). Therefore, the aforesaid hunting of the engine speed after the lock-up is suppressed.

Moreover, the integral term generating unit 3 in the embodiment of the present invention forcibly sets the target torque difference I-term DMLLRI to zero when the creep activate flag B_CREEPACT changes from ON to OFF.

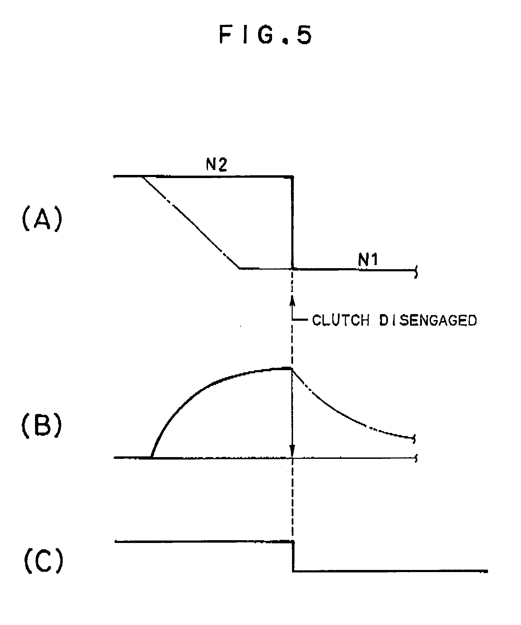

Fig. 5(A), Fig. 5(B), and Fig. 5(C) show explanatory charts to further explain the forced reset of the target torque difference I-term DMLLRI, Hereinafter, the forced reset of the target torque difference I-term DMLLRI will be described with reference to Figs. 5(A) to 5(C). Note that, in Fig. 5(A), the solid line and the chain line are characteristic lines schematically showing the target speed of the engine 100 and the vehicle speed, respectively, before and after the creep driving is finished,

First, conventionally, when the creep driving is finished, that is, when the creep activate flag B_CREEPACT changes from ON to OFF (see Fig. 5(C)), the target torque difference I-term DMLLRI gradually decreases as shown by the chain two-dotted line in Fig. 5(B). Accordingly, in spite that the clutch is disengaged, the racing of the engine speed occurs.

On the other hand, in the embodiment of the invention of the present application, at an instant when the clutch is disengaged, that is, at an instant when the creep activate flag B_CREEPACT changes from ON to OFF, the value of the target torque difference I-term DMLLRI is forcibly set to zero (see the solid arrow portion in Fig. 5(B)), so that no racing of the engine speed occurs after the clutch is disengaged, unlike in the conventional case.

Moreover, the minimum value and the maximum value of the target torque difference I-term DMLLRI outputted from the integral term generating unit 3 in the embodiment of the present invention are limited to predetermined values by the I-term output limiter 4.

Next, the idling speed control in the above-described configuration will be described with reference to the flowchart shown in Fig, 3.

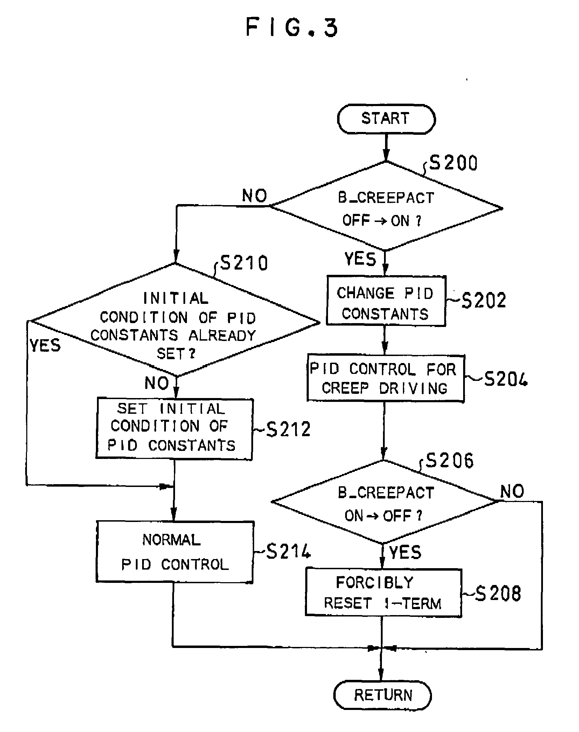

Fig. 3 shows the processing procedure of the idling speed control executed by the engine ECU 101 as configured above, and it is executed as one of various kinds of sub-routine processing executed by the engine ECU 101.
When the processing is started, it is first judged whether or not the creep activate flag B_CREEPACT has changed from OFF to ON (see S200 in Fig. 3), and when it is judged that the creep activate flag B_CREEPACT has changed from OFF to ON (YES), the flow goes to Step S202 which will be described later. When, on the other hand, it is judged that the creep activate flag B_CREEPACT has not changed from OFF to ON (NO), in other words, when it is judged that the creep activate flag B_CREEPACT is OFF, the flow goes to the processing at Step 5210 which will be described next.

At Step S210, it is judged whether or not the initial condition of the arithmetic constants in the PID control has been already set, and when it is judged that the initial condition has been already set (YES), the flow goes to the processing at Step S214 which will be described later. When, on the other hand, it is judged that the initial condition of the arithmetic constants in the PID control has not been set yet (NO), in other words, in such a case where this sub-routine processing is executed for the first time after the activation of the device, the initial condition of the arithmetic constants in the PID control is set (see Step S212). Specifically, as previously described with reference to Fig. 2, the integral constant for the normal idling state, that is, for the idling state other than the creep driving mode is set in the integral term generating unit 3 by the integration initial condition setting unit 5. At the same time, in the P-term/D-term generating unit 2, the arithmetic constant for the normal idling state pre-stored in the P-term/D-term generating unit 2 is set in response to OFF of the creep activate flag B_CREEPACT.

Next, the idling speed control by the PID control for the normal state is performed using the arithmetic constants that are set as described above (see Step 5214 in Fig. 3), and a series of this sub-routine processing is once finished.

Meanwhile, when the flow goes to the processing at Step S202 in response to the YES judgment in the previous processing at Step S200, the PID constants are changed in response to the judgment that the creep driving is started. Specifically, as previously described with reference to Fig. 2 and Figs. 4(A) to 4(C), in the integral term generating unit 3, the change of the creep activate flag B_CREEPACT from OFF to ON is detected, and the pre-stored integral constant for the creep driving is set instead of the aforesaid initial condition. At the same time, in the P-term/D-term generating unit 2, in response to the detection of the change of the creep activate flag B_CREEPACT from OFF to ON, the arithmetic constant appropriate for the creep driving pre-stored in the P-term/D-term generating unit 2 is set.

Next, the idling speed control by the PID control appropriate for the creep driving is performed based on the arithmetic constants that are set as described above (see Step S204 in Fig. 3).

Therefore, the arithmetic constants in the PID control in this case are set as previously described. That is, especially when the creep driving is started in the idling state and the not-shown clutch is gradually engaged from the half-engaged state to be finally locked up and the actual engine speed reaches the target speed, the integral term in the PID control thereafter quickly decreases unlike in the normal state (non-creep driving mode), so that the hunting phenomenon of the engine speed as conventionally occurred is suppressed.

Next, it is judged whether or not the creep activate flag B_CREPACT has changed from ON to OFF (see Step S206 in Fig. 3). When it is judged that the creep activate flag B_CREPACT has changed from ON to OFF, it is judged that the not-shown clutch is disengaged and the vehicle is in halt, so that the forced reset of the integral term (I-term) in the PID control is executed (see Step S208 in Fig. 3), and a series of the sub-routine processing is once finished. That is, as previously described with reference to Fig. 2, the target torque difference 1-term DMLLRI is forcibly set to zero in the integral term generating unit 3,

Therefore, unlike in the conventional case, it is possible to surely prevent the phenomenon of the racing of the engine speed, which occurs due to the remaining value of the integral term because of the slow decrease of the integral term in the PID control, in spite that the clutch (not-shown) is disengaged.

Meanwhile, when it is judged at previous Step S206 that the creep activate flag B_CREEPACT has not changed from ON to OFF, it is judged that the creep driving is continuing, so that the idling speed control by the PID control described at previous Step S204 is continued and a series of the sub-routine processing is once finished.

Note that as for the arithmetic constants in the PID control selectively used as described above, various appropriate arithmetic constants should be selected according to the scale of the vehicle and the like, and these arithmetic constants are not necessarily limited to specific values. Further, which arithmetic constants are appropriate is preferably determined based on computer simulations, experiments, and so on.

In the above-described configuration example, a creep discriminating means is realized by the creep activate flag generating unit 51 of the engine ECU 101, in other words, by the engine ECU 101 executing Step S200 and Step S206.

Further, a target speed generating means is realized by the idling target speed generating unit 52 of the engine ECU 101.

Moreover, a PID control means is realized by the idling speed PID control unit 54 of the engine ECU 101.

According to the present invention, when the creep driving is started in the idling state, the arithmetic constants appropriate for the creep driving mode are selectively used in the PID control, so that the hunting phenomenon of the engine speed in the creep driving mode is surely suppressed unlike in the conventional case. This can bring about an effect that it is possible to provide a vehicle with a comfortable running feeling without giving any uncomfortable feeling or unnecessary anxiety to a passenger.

Moreover, when the clutch is disengaged from the creep driving mode, the value of the integral term in the PID control of the engine idling speed is forcibly set to zero, so that the unnecessary racing of the engine speed is surely suppressed when the clutch is disengaged in the creep driving mode, unlike in the conventional case. This brings about an effect that it is possible to provide a vehicle high in drivability without giving any uncomfortable feeling or anxiety to the passenger.

## Claims

1. Method for controlling an engine idling speed in a vehicle capable of controlling an operation of a transmission, preferably in a manual mode or an automatic mode selected as desired, and performing PID control of the speed of the engine in an idling state based on a difference between an actual speed and a target speed of the engine,
**characterized in**
**that** when creep driving is finished by disengagement of a clutch from a state where the vehicle is in a creep driving mode, an integral value in the PID control is forcibly set to zero,

2. Device for controlling an engine idling speed in a vehicle capable of controlling an operation of a transmission, preferably in a manual mode or an automatic mode selected as desired, and performing PID control of a speed of the engine in an idling state based on a difference between an actual speed and a target speed of the engine,
**characterized in**
**that** the device comprises:
a creep discriminating means for generating signals corresponding to start and end of creep driving respectively;
a target speed generating means for calculating and outputing a target speed of the engine in a creep driving mode in the idling state and a target speed of the engine in a non-creep driving mode in the idling state, based on an output of the creep discriminating means; and
a PID control means for generating a control signal for speed control of the engine by a PID operation based on a difference between the output of the target speed generating means and the actual speed of the engine;
wherein the PID control means forcibly sets an integral value to zero when the creep discriminating means outputs the signal corresponding to the end of the creep driving.
